(19) Europäisches Patentamt
European Patent Office
Office européen des brevets

(11) **EP 3 743 318 B1**

(12) **EUROPÄISCHE PATENTSCHRIFT**

(45) Veröffentlichungstag und Bekanntmachung des Hinweises auf die Patenterteilung:
**04.02.2026  Patentblatt 2026/06**

(21) Anmeldenummer: **19701042.4**

(22) Anmeldetag: **10.01.2019**

(51) Internationale Patentklassifikation (IPC):
***B60W 40/12*** (2012.01)      ***B60W 40/02*** (2006.01)
***B60W 30/06*** (2006.01)

(52) Gemeinsame Patentklassifikation (CPC):
**B60W 40/02; B60W 30/06; B60W 40/12; G01C 21/1652; G01C 21/30; G05D 1/0255; G05D 1/0272; G05D 1/0274; B60W 2420/54; B60W 2520/28; B60W 2540/18; G01S 2015/935**

(86) Internationale Anmeldenummer:
**PCT/EP2019/050485**

(87) Internationale Veröffentlichungsnummer:
**WO 2019/145152 (01.08.2019 Gazette 2019/31)**

(54) **KORRIGIEREN EINER POSITION EINES FAHRZEUGS MIT SLAM**

CORRECTION OF A POSITION OF A VEHICLE USING SLAM

CORRECTION DE LA POSITION D'UN VEHICULE AVEC SLAM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **23.01.2018  DE 102018101388**

(43) Veröffentlichungstag der Anmeldung:
**02.12.2020  Patentblatt 2020/49**

(73) Patentinhaber: **Valeo Schalter und Sensoren GmbH**
**74321 Bietigheim-Bissingen (DE)**

(72) Erfinder:
• **BARIANT, Jean Francois**
**74321 Bietigheim-Bissingen (DE)**
• **MICHAEL, Anto**
**74321 Bietigheim-Bissingen (DE)**

(74) Vertreter: **Pothmann, Karsten**
**Valeo Schalter und Sensoren GmbH**
**CDA-IP**
**Laiernstraße 12**
**74321 Bietigheim-Bissingen (DE)**

(56) Entgegenhaltungen:
DE-A1- 102011 118 726      DE-A1- 102011 118 726
DE-A1- 102015 116 220      DE-A1- 102015 116 220
DE-A1- 102016 106 978      DE-A1- 102016 106 978
US-A1- 2017 132 334

• M.W.M.G. DISSANAYAKE ET AL: "A solution to the simultaneous localization and map building (SLAM) problem", IEEE TRANSACTIONS ON ROBOTICS AND AUTOMATION, vol. 17, no. 3, 1 June 2001 (2001-06-01), US, pages 229 - 241, XP055575116, ISSN: 1042-296X, DOI: 10.1109/70.938381
• M.W.M.G. DISSANAYAKE ET AL: "A solution to the simultaneous localization and map building (SLAM) problem", IEEE TRANSACTIONS ON ROBOTICS AND AUTOMATION, vol. 17, no. 3, 1 June 2001 (2001-06-01), US, pages 229 - 241, XP055575116, ISSN: 1042-296X, DOI: 10.1109/70.938381

EP 3 743 318 B1

**Beschreibung**

Die vorliegende Erfindung betrifft ein Verfahren zum Korrigieren einer Position eines Fahrzeugs, insbesondere beim Einparken in einer Parklücke, wobei die Position des Fahrzeugs basierend auf Odometrieinformationen des Fahrzeugs bestimmt wird.

Die vorliegende Erfindung betrifft außerdem eine Steuerungseinrichtung für ein Fahrunterstützungssystem eines Fahrzeugs, welche ausgeführt ist, Odometrieinformationen des Fahrzeugs zu empfangen, und die weiter ausgeführt ist, das obige Verfahren durchzuführen.

Die vorliegende Erfindung betrifft ebenfalls ein Fahrunterstützungssystem für ein Fahrzeug mit einer obigen Steuerungseinrichtung.

Die vorliegende Erfindung betrifft weiterhin ein Fahrzeug mit einem obigen Fahrunterstützungssystem.

Fahrunterstützungssysteme umfassen bereits heute weit verbreitete Fahrerassistenzsysteme, die einem Fahrzeugführer beim Führen des Fahrzeugs Assistieren. Solche Fahrerassistenzsysteme umfassen beispielsweise Parkassistenzsysteme oder Abstandswarnsysteme, die typischerweise bei niedrigen Geschwindigkeiten aktiv sind, sowie zunehmend weitere Assistenzsysteme, die auch das Fahren bei höheren Geschwindigkeiten unterstützen, beispielsweise Spurwechselassistenzsysteme und Totwinkel-Assistenzsysteme. Die Fahrunterstützungssysteme können auch in autonomen Fahrzeugen entsprechende Funktionen bereitstellen, um eine teil-autonome oder autonome Bewegung des Fahrzeugs zu unterstützen.

Bei den im Stand der Technik bekannten Fahrunterstützungssystemen ist es häufig erforderlich, eine Umgebung eines jeweiligen Fahrzeugs, das oft als Ego-Fahrzeug bezeichnet wird, zu überwachen. Dies erfolgt mit Umgebungssensoren des Fahrzeugs bzw. des in dem Fahrzeug verwendeten Fahrunterstützungssystems. Solche Umgebungssensoren können als Ultraschallsensor, als Radarsensor oder als LiDAR-Sensor ausgeführt sein. Alternativ oder zusätzlich können die Umgebungssensoren Kameras umfassen. Die Umgebungssensoren sind ausgeführt, Sensorinformationen mit Umgebungsinformationen einer Umgebung des Fahrzeugs zu liefern. Dabei können Sensorinformationen einer Mehrzahl gleichartiger und/oder unterschiedlicher Umgebungssensoren kombiniert werden. Die Umgebungssensoren können dabei verschiedenen Fahrerassistenzsystemen gemeinsam zugeordnet sein, oder jeweils einem einzigen.

Ein wichtiger und heute bereits weit verbreiteter Anwendungsfall für Fahrunterstützungssysteme ist das Parken des Ego-Fahrzeugs, was sowohl ein Einparken in einer identifizierten Parklücke wie auch ein nachfolgendes Ausparken aus der Parklücke umfassen kann. Entsprechend können die Fahrunterstützungssysteme den Fahrzeugführer beim Manövrieren des Kraftfahrzeugs und insbesondere beim Ein- und Ausparken des Kraftfahrzeugs in eine Parklücke unterstützen, oder das Fahrzeug semi-autonom oder autonom Manövrieren.

Aus dem Stand der Technik sind bereits Fahrunterstützungssysteme bekannt, welche unter Verwendung beispielsweise von Ultraschallsensoren Parklücken beziehungsweise freie Stellplätze erkennen können, um den Fahrzeugführer beim Einparkvorgang zu unterstützen, oder das Fahrzeug z.B. nach einer Bestätigung des Fahrzeugführers semi-autonom oder autonom in der aufgefundenen Parklücke zu parken. Dies betrifft sowohl ein Längsparken als auch ein Querparken des Fahrzeugs. Beim semiautonomen Parken übernimmt das Fahrerassistenzsystem lediglich die Lenkung des Kraftfahrzeugs und der Fahrer betätigt das Gaspedal und die Bremse, oder umgekehrt. Beim autonomen Parken ist kein Eingriff durch den Fahrzeugführer mehr erforderlich.

In diesem Zusammenhang ist außerdem bekannt, beim Manövrieren des Fahrzeugs und insbesondere beim Einparken des Fahrzeugs dessen Bewegung mittels Odometrie zu erfassen. Dabei kann beispielsweise die Anzahl der Radumdrehungen bzw. Ticks und/oder ein Lenkeinschlag bei einer Bewegung des Fahrzeugs erfasst werden. Entsprechend kann eine Fahrtrichtung des Fahrzeugs anhand von Daten eines Lenkwinkelsensors und/oder eines Drehratensensors bestimmt werden, und eine axiale Bewegung wird durch einen entsprechenden Sensor an einem Rad des Fahrzeugs erfasst.

Um die Bewegung des Fahrzeugs mittels Odometrie möglichst genau erfassen zu können, bedarf eines genauen Odometriemodells. In der Realität können aber beispielsweise infolge von Fertigungstoleranzen des Fahrzeugs, Modifikationen am Fahrzeug, beispielsweise einer Verwendung von Reifen mit einem abweichenden Durchmesser, oder auch Toleranzen von Fahrzeugparametern, beispielsweise einem Reifenluftdruck, Abweichungen von dem Odometriemodell auftreten. Dies umfasst weiterhin, dass das Lenksystem des Fahrzeugs entsprechende Toleranzen aufweist, oder dass Toleranzen bezüglich des Chassis und der Fahrzeuggeometrie, beispielsweise der Spurweite, einer Parallelität der Räder oder dergleichen, oder auch eine Asymmetrie des Fahrzeugs vorliegen.

Um diese Fehler in der Odometrie ausgleichen zu können, wird beispielsweise das sogenannte SLAM-Verfahren (SLAM - Simultaneous Localization and Mapping) verwendet. Bei diesem Verfahren kann beispielsweise eine Karte der Umgebung des Fahrzeugs erstellt und die räumliche Lage des Fahrzeugs innerhalb dieser Karte geschätzt werden.

Eine Grundvoraussetzung für eine allgemeine Anwendung von SLAM ist, dass ein Merkmal, d.h. ein Objekt auf der Karte, identifiziert werden kann, um dieses Objekt bei einer Bewegung des Fahrzeugs sukzessive nachverfolgen zu können. Eine solche Nachverfolgung wird bereits auf Basis von verschiedenartigen Umgebungssensoren realisiert, beispielsweise Kameras, LiDAR-basierten Sensoren, beispielsweise Laserscanner, Radarsensoren, oder anderen, die ein weites Sichtfeld aufweisen, so dass die selben Objekte nachverfolgt werden können, auch während einer Bewegung des Ego-Fahrzeugs.

Bei Ultraschallsensoren lassen sich SLAM-Verfahren jedoch im Allgemeinen nicht anwenden. Dies liegt daran, dass Ultraschallsensoren innerhalb ihres Öffnungswinkels als Information lediglich eine Schalllaufzeit einer Reflektion eines ausgesendeten Ultraschallpulses liefern. Die Signallaufzeit wird auch "time of flight" genannt. Die Reflektion entspricht dabei typischerweise demjenigen Echo, welches an einem nächstgelegenen Objekt innerhalb des Öffnungswinkels erzeugt wird. Weitergehende Informationen sind von einem einzelnen Ultraschallsensor nicht verfügbar. Dadurch ist es praktisch nicht möglich, ein einzelnes Objekt mit solchen Ultraschallsensoren zu verfolgen, da nicht sichergestellt werden kann, dass eine empfangene Reflektion immer demselben Objekt zugeordnet werden kann. Die Zuordnung wird bei Fahrzeugen erschwert, wenn sich das Fahrzeug bewegt. Bei einer Teilnahme am Verkehr ist außerdem davon auszugehen, dass sich auch die Objekte selber bewegen können. Somit können aufeinanderfolgende Echos von verschiedenen Objekten stammen und eine Zuordnung eines Echos zu einem Objekt ist nicht möglich. Es können keine Referenzen erzeugt werden, die eine Basis für SLAM bilden könnten, so dass eine Lokalisierung eines Objekts in Bezug auf eine Referenz ausscheidet.

In diesem Zusammenhang ist beispielsweise aus der DE 10 2009 039 085 A1 ein Verfahren zum Manövrieren eines Fahrzeugs bekannt, bei welchem ein bodenniedriges Hindernis in der Umgebung des Fahrzeugs durch zumindest einen Entfernungssensor des Fahrzeugs erfasst wird, wobei ein Abstand des Hindernisses zum Fahrzeug bestimmt wird und bei einem weiteren Annähern einer bodennahen und/oder bodenberührenden Komponente des Fahrzeugs zu dem bodenniedrigen Hindernis innerhalb eines Nahbereichs des Fahrzeugs, in dem das Hindernis außerhalb des Erfassungsbereichs des Entfernungssensors liegt, der Abstand im Nahbereich unter Berücksichtigung zumindest der Informationen über den Abstand vor dem Eintritt in den Nahbereich bestimmt wird.

Die DE 10 2009 046158 A1 betrifft ein Verfahren zur Erkennung von Objekten mit geringer Höhe mit einem System zur Hinderniserkennung in Fahrzeugen, wobei das System zur Hinderniserkennung Abstandssensoren zur Ermittlung des Abstandes zu Objekten und mittels Auswertung umfasst. Das Verfahren umfasst folgende Schritte: (a) Kontinuierliches Erfassen des Abstandes zu einem Objekt mittels der Abstandssensoren oder Erfassen des Abstandes zu einem Objekt in vorgegebenen Intervallen, (b) Prüfen, ob das Objekt beim Annähern an das Fahrzeug bei Unterschreiten eines vorgegebenen Abstandes von den Abstandssensoren weiter erfasst wird oder aus dem Detektionsbereich der Abstandssensoren verschwindet, (c) Erkennen des Objekts, das aus dem Detektionsbereich der Abstandssensoren verschwindet, als Objekt mit geringer Höhe.

Außerdem ist aus der DE 10 2015 116 220 A1 ein Verfahren zum zumindest semiautonomen Manövrieren eines Kraftfahrzeugs bekannt, bei welchem anhand von Sensordaten zumindest eines Ultraschallsensors eine Parklücke in einem Umgebungsbereich des Kraftfahrzeugs erkannt wird sowie ein Abstand zwischen dem Kraftfahrzeug und einem die Parklücke begrenzenden Objekt bestimmt wird, eine Fahrtrajektorie zum Einparken des Kraftfahrzeugs in die Parklücke bestimmt wird, das Kraftfahrzeug entlang der Fahrtrajektorie manövriert wird und während des Manövrierens des Kraftfahrzeugs an einer vorbestimmten Position auf Grundlage von Odometrie und dem bestimmten Abstand ein erster Abstandswert sowie anhand der Sensordaten ein zweiter Abstandswert bestimmt werden, wobei der erste und der zweite Abstandswert jeweils den Abstand zwischen dem Kraftfahrzeug und dem Objekt beschreiben, wobei anhand eines Vergleichs des ersten Abstandswerts und des zweiten Abstandswerts ein Korrekturwert zum Korrigieren der Fahrtrajektorie bestimmt wird.

Ausgehend von dem oben genannten Stand der Technik liegt der Erfindung somit die Aufgabe zugrunde, ein Verfahren zum Korrigieren einer Position eines Fahrzeugs, eine Steuerungseinrichtung für ein Fahrunterstützungssystem eines Fahrzeugs, ein Fahrunterstützungssystem für ein Fahrzeug mit einer solchen Steuerungseinrichtung sowie ein Fahrzeug mit einem solchen Fahrunterstützungssystem der jeweils oben angegebenen Art anzugeben, die eine zuverlässige Bestimmung einer Position des Fahrzeugs in Bezug auf seine Umgebung ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren angegeben zum Korrigieren einer Position eines Fahrzeugs, insbesondere beim Einparken in einer Parklücke, umfassend die Schritte Bestimmen der Position des Fahrzeugs basierend auf Odometrieinformationen des Fahrzeugs, Erfassen von Ultraschallsignalen von einem Linienobjekt, Durchführen eines Verfahrens zur Simultanen Lokalisierung und Kartenzuordnung (SLAM) basierend auf dem Linienobjekt und den Ultraschallsignalen, und Korrigieren der Position des Fahrzeugs basierend auf Odometrieinformationen mit der Simultanen Lokalisierung und Kartenzuordnung basierend auf dem Linienobjekt.

Erfindungsgemäß ist außerdem eine Steuerungseinrichtung für ein Fahrunterstützungssystem eines Fahrzeugs angegeben, welche ausgeführt ist, Odometrieinformationen des Fahrzeugs zu empfangen, die weiter ausgeführt ist, Ultraschallsignale von wenigstens einem Ultraschallsensor des Fahrunterstützungssystems zu empfangen, und die weiter ausgeführt ist, das obige Verfahren durchzuführen.

Erfindungsgemäß ist außerdem ein Fahrunterstützungssystem für ein Fahrzeug angegeben mit einer obigen Steuerungseinrichtung und mit wenigstens einem Ultraschallsensor.

Weiter ist erfindungsgemäß ein Fahrzeug mit einem obigen Fahrunterstützungssystem angegeben.

Grundidee der vorliegenden Erfindung ist es also, ein Objekt mit einer bekannten Struktur als Basis zu verwenden, um durch die bekannte Struktur, d.h. in diesem Fall basierend auf der Linienform des Objekts, das Verfahren zur Simultanen Lokalisierung und Kartenzuordnung durchführen zu können. Das Linienobjekt wird also als Merkmal für das SLAM-Verfahren verwendet. Da das Linienobjekt gerade ist, ist ein genauer Ursprung der Reflektion des von dem Ultraschallsensor abgestrahlten Ultraschallsignals nicht relevant. Der Ultraschallsensor wird basierend auf der ermittelten Schalllaufzeit der Reflektion immer den Abstand zu dem Linienobjekt korrekt ermitteln. Es wird also durch das Linienobjekt ein tangentiales Kriterium eines Signalwegs des von dem wenigstens einen Ultraschallsensor abgestrahlten Ultraschallpulses zu dem Linienobjekt und zurück zu dem wenigstens einen Ultraschallsensor gebildet. Ein Driften der Fahrzeugposition relativ zu dem Linienobjekt kann somit verhindert werden.

Das Bestimmen der Position des Fahrzeugs basierend auf Odometrieinformationen des Fahrzeugs ist als solches im Stand der Technik bekannt und wird daher nicht im Detail erläutert. Odometrieinformationen umfassen Informationen, die von dem Fahrzeug selbst basierend auf seinen Odometriesensoren gewonnen werden.

Beim Erfassen von Ultraschallsignalen von dem Linienobjekt wird typischerweise von einem Ultraschallsensor ein Ultraschallpuls ausgestrahlt, der an dem Linienobjekt reflektiert wird. Die Reflektion wird von dem Ultraschallsensor empfangen. Der Ultraschallsensor bestimmt aus einer Laufzeit des Schalls von dem Ultraschallsensor zu dem Linienobjekt und wieder zurück zu dem Ultraschallsensor einen Abstand des Linienobjekts. Alternativ kann der Abstand mit mehreren Ultraschallsensoren gemeinsam bestimmt werden, indem der Ultraschallpuls von einem Ultraschallsensor abgestrahlt wird, und die Reflektion an dem Linienobjekt von wenigstens einem anderen Ultraschallsensor empfangen wird. Zusätzlich kann die Reflektion von dem Ultraschallsensor, der den Ultraschallpuls abgestrahlt hat, empfangen und ausgewertet werden.

Das Verfahren zur Simultanen Lokalisierung und Kartenzuordnung (SLAM) wird basierend auf dem Linienobjekt und den Ultraschallsignalen durchgeführt. Dazu werden zusätzlich die Fahrzeugposition basierend auf den Odometrieinformationen und Odometrieparameter verwendet. Aufgrund der Eigenschaften des Linienobjekts sind die von dem Linienobjekt empfangenen Ultraschallsignale miteinander korreliert, so dass das Objekt auch mit den Ultraschallsensoren, die lediglich eine Abstandsinformation liefern, nachverfolgt werden kann. Demgegenüber ist es bei bekannten SLAM-Verfahren üblicherweise erforderlich, jeweils eine exakte Position des Objekts, d.h. des Linienobjekts, mit dem entsprechenden Sensor zu ermitteln, so dass darauf basierend die Nachverfolgung durchgeführt werden kann.

Die Position des Fahrzeugs, wie sie basierend auf den Odometrieinformationen bestimmt wurde, wird basierend auf der Simultanen Lokalisierung und Kartenzuordnung korrigiert. Dabei können sich beispielsweise beim Einparken mit einem durchschnittlichen Fahrzeug in einer Längsparklücke im Ergebnis Abweichungen der Fahrzeugposition von etwa 10 cm ergeben, welche durch die Simultane Lokalisierung und Kartenzuordnung basierend auf dem Linienobjekt korrigiert werden.

Vorzugsweise wird das Verfahren zur Simultanen Lokalisierung und Kartenzuordnung kontinuierlich mit der darauf basierenden Korrektur der Position des Fahrzeugs kontinuierlich und parallel durchgeführt, um sich ergebende Abweichungen der Position, beispielsweise während des Einparkens, fortlaufend zu korrigieren.

Das Linienobjekt kann eine Bodenkante, ein Bordstein, eine Wand oder ähnliches sein. Wichtig ist lediglich, dass das Linienobjekt entlang seiner Länge mit dem wenigstens einen Ultraschallsensor erfasst werden kann. Solche Linienobjekte kommen insbesondere im Bereich von Parklücken häufig vor, beispielsweise als eine Begrenzung der Parklücke. Zusätzlich ist dabei davon auszugehen, dass sich das Linienobjekt im Wesentlichen parallel zu einer Fahrbahn befindet.

Die Parklücke kann prinzipiell beliebig ausgeführt sein, beispielsweise zum Längs- oder Querparken.

Das Fahrzeug ist ein prinzipiell beliebiges Fahrzeug mit dem Fahrunterstützungssystem.

Das Fahrunterstützungssystem kann ein bereits heute weit verbreitetes Fahrerassistenzsystem sein, das einen Fahrzeugführer beim Führen des Fahrzeugs unterstützt. Das Fahrunterstützungssystem kann auch in einem autonomen oder semiautonomen Fahrzeug eine entsprechende Funktion bereitstellen, um eine autonome oder semi-autonome Führung des Fahrzeugs zu unterstützen.

Erfindungsgemäß umfasst der Schritt des Erfassens des Linienobjekts in Längsrichtung des Fahrzeugs ein Überprüfen der erfassten Ultraschallsignale als zu dem Linienobjekt gehörend. Das Erfassen des Linienobjekts erfolgt mit dem wenigstens einen Ultraschallsensor. Ultraschallsignale, d.h. Echos des von dem Ultraschallsensor abgestrahlten Ultraschallpulses an Objekten, die nicht zu dem Linienobjekt gehören, werden verworfen. Dadurch kann das SLAM-Verfahren mit einer hohen Genauigkeit durchgeführt werden. Es erfolgt also ein Verifizieren der Linienstruktur des Linienobjekts.

In vorteilhafter Ausgestaltung der Erfindung umfasst der Schritt des Erfassens eines Linienobjekts in Längsrichtung des Fahrzeugs ein Erfassen von einer Mehrzahl Linienobjekten, und das Verfahren umfasst einen zusätzlichen Schritt zum Zuordnen der erfassten Ultraschallsignale zu einem der Linienobjekte. Das Erfassen der Linienobjekte erfolgt mit dem wenigstens einen Ultraschallsensor. Die Linienobjekte können dabei auch nacheinander erfasst und in dem Verfahren verwendet werden. Durch die mehreren Linienobjekte kann das Verfahren stabil durchgeführt werden, insbesondere beim Überschreiten eines Linienobjekts, oder wenn das Linienobjekt nicht mehr im Bereich des wenigstens einen Ultraschallsensor liegt und von diesem nicht mehr erfasst werden kann. Dies ist beispielsweise beim Einparken der Fall, wenn das Fahrzeug oberhalb eines Bordsteins geparkt werden soll, und die Parklücke zusätzlich auf Ihrer der Fahrbahn abgewandten Seite von einer weiteren Kante begrenzt ist. In diesem Fall kann das Verfahren zunächst basierend auf dem Bordstein, der als erstes Linienobjekt von dem wenigstens einen Ultraschallsensor erfasst wird, und danach basierend auf der begrenzenden Kante durchgeführt werden. Dabei können von dem wenigstens einen Ultraschallsensor empfangene Ultraschallreflektionen der entsprechenden Kante zugeordnet werden, um eine fehlerhafte Korrektur der Fahrzeugposition zu vermeiden. Für die prinzipielle Erfassung der Linienobjekte können weitere Umgebungssensoren des Fahrzeugs zusätzlich oder auch alleine verwendet werden.

In vorteilhafter Ausgestaltung der Erfindung umfasst der Schritt des Überprüfens der erfassten Ultraschallsignale als zu dem Linienobjekt gehörend und/oder der Schritt zum Zuordnen der erfassten Ultraschallsignale zu einem der Linienobjekte eine Bestimmung einer Mahalanobis-Distanz. Die Mahalanobis-Distanz ist ein Distanzmaß zwischen Punkten in einem mehrdimensionalen Vektorraum. Die Mahalanobis-Distanz wird beispielsweise in der Statistik im Zusammenhang mit multivariaten Verfahren verwendet. Bei multivariaten Verteilungen werden m Koordinaten eines Punktes als m-dimensionaler Spaltenvektor dargestellt, der als Realisation eines Zufallsvektors X mit der Kovarianzmatrix $\Sigma$ betrachtet wird. Ein Abstand zweier so verteilter Punkte x und y wird dann durch die Mahalanobis-Distanz bestimmt. Die Mahalanobis-Distanz ist skalen- und translationsinvariant. Graphisch bilden die Punkte gleicher Mahalanobis-Distanz von einem Zentrum im Zweidimensionalen eine Ellipse, während sich bei der euklidischen Distanz ein Kreis ergibt. Die Flächen konstanten Abstandes von einem Punkt können bei der Mahalanobis-Distanz beliebige Kegelschnitte sein.

In vorteilhafter Ausgestaltung der Erfindung umfasst der Schritt des Durchführens eines Verfahrens zur Simultanen Lokalisierung und Kartenzuordnung ein Durchführen einer Kalman-Filterung. Das Filtern mit dem Kalman-Filter ist ein mathematisches Verfahren, das dazu dient, Fehler in realen Messwerten zu reduzieren und Schätzungen für nicht messbare Systemgrößen zu liefern. Voraussetzung dabei ist, dass die interessierenden Werte durch ein mathematisches Modell beispielsweise in Form von Bewegungsgleichungen beschrieben werden können. Eine Besonderheit des 1960 von Kálmán vorgestellten Filters bildet dabei seine spezielle mathematische Struktur, die den Einsatz in Echtzeitsystemen ermöglicht. Das Kalman-Filter basiert auf einer Zustandsraummodellierung, bei der explizit zwischen der Dynamik des Systemzustands und dem Prozess seiner Messung unterschieden wird. Die Schätzung des Zustands beruht vorzugsweise auf einer Kenntnis früherer Beobachtungen. Dabei ist ein minimaler Schätzfehler wünschenswert der, der durch die bereits gemachten Beobachtungen nicht zu verbessern sein soll. Für lange Messreihen wird das entsprechende mathematische Minimierungsproblem schnell unhandlich, da für jede Schätzung die gesamte Messreihe ausgewertet werden muss. Die Idee, die dem Kalman-Filter zugrunde liegt, ist nun, die Schätzung zum Zeitpunkt k als lineare Kombination der vorangegangenen Schätzung mit dem neuen Messwert zk zu formulieren. Dies ist möglich, da die Schätzung zum Zeitpunkt k-1 die Informationen der Messreihe zk-1, zk-2 ... z1 enthält. Diese rekursive Formulierung des Schätzproblems erlaubt eine effiziente rechentechnische Umsetzung. Das Kalman-Filter hat neben seiner handhabbaren rekursiven zudem eine Prädiktor-Korrektor-Struktur. Entsprechend wird bei einem ersten Schritt des Filtervorgangs die zeitlich vorangegangene Schätzung der Zustandsdynamik unterworfen, um eine Voraussage für den aktuellen Zeitpunkt zu erhalten. Die Vorhersagen werden schließlich mit den neuen Informationen des aktuellen Messwerts korrigiert und ergeben die gesuchten Schätzungen.

In vorteilhafter Ausgestaltung der Erfindung umfasst das Verfahren einen zusätzlichen Schritt zum Bestimmen von Odometrieparametern des Fahrzeugs. Die Odometrieparameter ergeben sich bei der Durchführung des Verfahrens und können verwendet werden, um die Bestimmung der Position des Fahrzeugs basierend auf Odometrieinformationen des Fahrzeugs zu verbessern. Entsprechend können beispielsweise Radumfänge des Fahrzeugs angepasst werden, oder eine Lenkwinkelumrechnungstabelle.

In vorteilhafter Ausgestaltung der Erfindung umfasst das Verfahren einen zusätzlichen Schritt zum Erfassen eines Linienobjekts in Längsrichtung des Fahrzeugs, insbesondere mit wenigstens einem Ultraschallsensor. Das Erfassen des Linienobjekts kann prinzipiell mit einem beliebigen Umgebungssensor, also beispielsweise einer Kamera, einem LiDAR-basierten Sensor, insbesondere einem Laserscanner, einem Radarsensor und/oder einem Ultraschallsensor erfolgen. Bevorzugt ist hier allerdings wenigstens ein Ultraschallsensor, der einfach in der Anwendung ist und kostengünstig bereitgestellt werden kann. Das Erfassen des Linienobjekts erfolgt beispielsweise bei einer Vorbeifahrt an der Parklücke. Somit kann die Parklücke zunächst mit dem wenigstens einen Ultraschallsensor erfasst werden, und außerdem kann das Linienobjekt im Bereich der Parklücke bestimmt werden. Im Fall, dass im Bereich der Parklücke kein Linienobjekt vorhanden ist, kann das Verfahren in diesem Bereich nicht durchgeführt werden.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigen

Fig. 1    eine schematische Darstellung eines Fahrzeugs gemäß einer ersten, bevorzugten Ausführungsform der Erfindung mit einen Fahrunterstützungssystem mit einer Mehrzahl Ultraschallsensoren zum Erfassen eines Linienobjekts in einer Draufsicht, und

Fig. 2    ein Ablaufdiagramm eines Verfahrens gemäß einer zweiten Ausführungsform zum Korrigieren einer Position eines Fahrzeugs beim Einparken in einer Parklücke mit dem Fahrzeug und Fahrunterstützungssystem der ersten Ausführungsform.

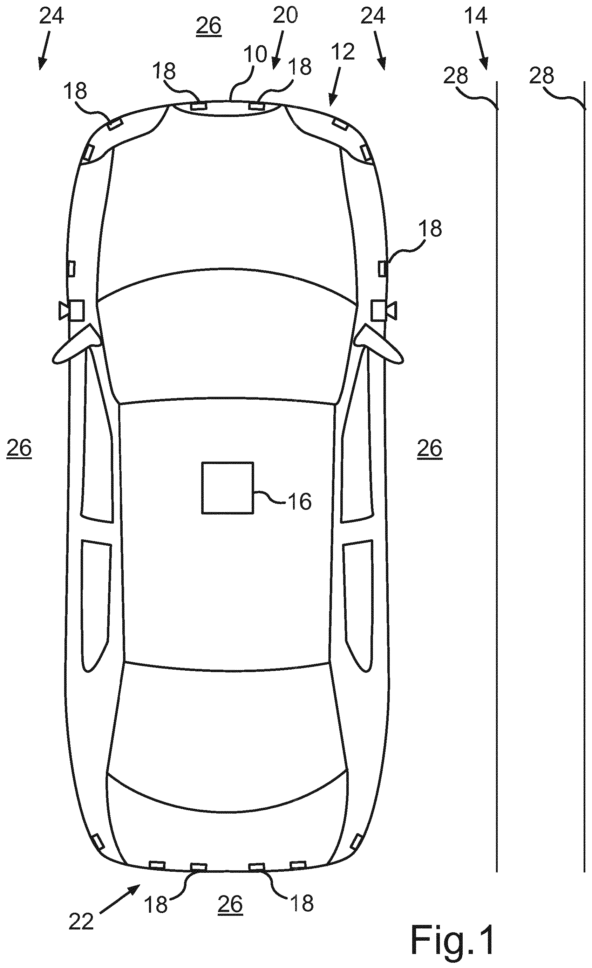

Die Figur 1 zeigt ein Fahrzeug 10 gemäß einer ersten, bevorzugten Ausführungsform der vorliegenden Erfindung. Das Fahrzeug 10 ist vorliegend als Personenkraftwagen ausgebildet.

Das Fahrzeug 10 umfasst ein Fahrunterstützungssystem 12, das in diesem Ausführungsbeispiel zum Einparken des Fahrzeugs 10 in einer Parklücke 14 ausgeführt ist.

Das Fahrunterstützungssystem 12 umfasst eine Steuerungseinrichtung 16, die hier durch ein elektronisches Steuergerät (ECU - Electronic Control Unit) des Fahrzeugs 10 gebildet ist. Darüber hinaus umfasst das Fahrunterstützungssystem 12 eine Mehrzahl Ultraschallsensoren 18. In dem vorliegenden Ausführungsbeispiel umfasst das Fahrunterstützungssystem 12 vierzehn Ultraschallsensoren 18, von denen sechs in einem Frontbereich 20 und sechs in einem Heckbereich 22 des Fahrzeugs 10 angeordnet sind. Die Ultraschallsensoren 18 im Frontbereich 20 und im Heckbereich 22 des Fahrzeugs 10 sind an dessen Stoßfängern angebracht. Zusätzlich ist ein Ultraschallsensor 18 an jeder Seite 24 des Fahrzeugs 10 angeordnet.

Jeder der Ultraschallsensoren 18 ist ausgeführt, Ultraschallpulse in eine Umgebung 26 des Fahrzeugs 10 zu senden und von Objekten 28 in der Umgebung 26 erzeugte Reflektionen der Ultraschallpulse zu empfangen. Beispielhaft sind in Figur 1 zwei Linienobjekte 28 als Objekte dargestellt.

Die Ultraschallsensoren 18 sind jeweils zur Datenübertragung mit der Steuerungseinrichtung 16 über einen hier nicht dargestellten Datenbus verbunden. Von den Ultraschallsensoren 18 erzeugte Sensorinformationen werden über den Datenbus an die Steuerungseinrichtung 16 übertragen, und dort gemeinsam ausgewertet und weiter verarbeitet.

Außerdem ist die Steuerungseinrichtung 16 ausgeführt, Odometrieinformationen des Fahrzeugs 10 zu empfangen.

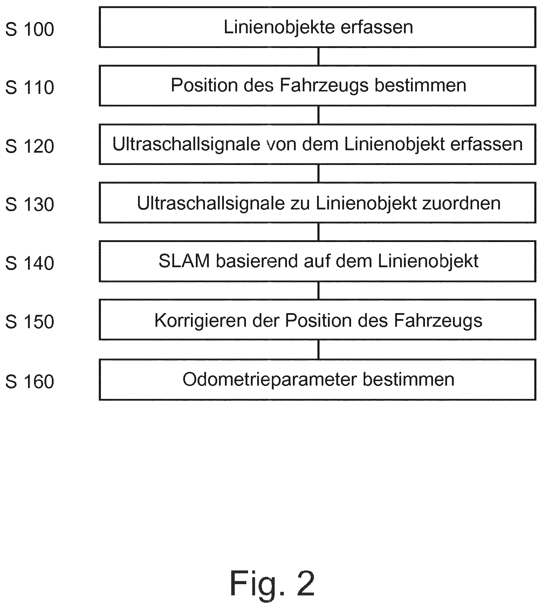

Nachfolgend wird ein Verfahren gemäß einer zweiten Ausführungsform zum Korrigieren einer Position des Fahrzeugs 10 beim Einparken in der Parklücke 14 unter Bezug auf Figur 2 beschrieben. Das Verfahren wird mit dem Fahrunterstützungssystem 12 des Fahrzeugs 10 der ersten Ausführungsform durchgeführt.

Das Verfahren beginnt in Schritt S100 mit einem Erfassen der Linienobjekte 28 in Längsrichtung des Fahrzeugs 10 mit dem an der entsprechenden Seite 24 des Fahrzeugs 10 positionierten Ultraschallsensor 18. Das Erfassen der Linienobjekte 28 erfolgt bei einer Vorbeifahrt des Fahrzeugs 10 an der Parklücke 14. Die Parklücke 14 ist hier zum Längsparken ausgeführt, und die Linienobjekte 28 werden hier durch eine Bodenkante und einen Bordstein gebildet.

Im nachfolgenden Schritt S110 wird die Position des Fahrzeugs 10 basierend auf Odometrieinformationen des Fahrzeugs 10 bestimmt. Die Bestimmung erfolgt basierend auf Informationen, die von dem Fahrzeug 10 selbst basierend auf seinen Odometriesensoren gewonnen werden, d.h. einem Lenkwinkel und Radumdrehungen des Fahrzeugs 10.

Schritt S120 betrifft ein Erfassen von Ultraschallsignalen von den Linienobjekten 28. Wie oben ausgeführt werden mit dem entsprechenden Ultraschallsensor 18 Ultraschallpulse ausgestrahlt, die an dem Linienobjekt 28 reflektiert, und die Reflektionen werden wieder von dem Ultraschallsensor 18 empfangen. Der Ultraschallsensor 18 bestimmt aus einer Laufzeit des Schalls von dem Ultraschallsensor 18 zu dem Linienobjekt 28 und wieder zurück zu dem Ultraschallsensor 18 einen Abstand zu dem Linienobjekt 28.

In einem Schritt S130 werden die erfassten Ultraschallsignale zu einem der Linienobjekte 28 zugeordnet. Es wird zusätzlich überprüft, ob die erfassten Ultraschallsignale zu dem Linienobjekt 28 gehören.

Dazu wird jeweils eine Mahalanobis-Distanz angewendet, die ein Distanzmaß zwischen Punkten in einem mehrdimensionalen Vektorraum liefert. Bei multivariaten Verteilungen werden m Koordinaten eines Punktes als m-dimensionaler Spaltenvektor dargestellt, der als Realisation eines Zufallsvektors X mit der Kovarianzmatrix $\Sigma$ betrachtet wird. Ein Abstand zweier so verteilter Punkte x und y wird dann durch die Mahalanobis-Distanz bestimmt.

Schritt S140 betrifft ein Durchführen eines Verfahrens zur Simultanen Lokalisierung und Kartenzuordnung (SLAM) basierend auf dem Linienobjekt 28 und den Ultraschallsignalen. Dazu werden zusätzlich die Fahrzeugposition basierend auf den Odometrieinformationen und Odometrieparameter verwendet.

Das Verfahren zur Simultanen Lokalisierung und Kartenzuordnung umfasst ein Durchführen einer Kalman-Filterung basierend auf einer Zustandsraummodellierung, bei der explizit zwischen der Dynamik des Systemzustands und dem Prozess seiner Messung unterschieden wird. Die Schätzung des Zustands beruht dabei auf einer Kenntnis früherer Beobachtungen, wie sie sich durch das Linienobjekt 28 ergibt.

Für einen Parkplatz 14 mit n Linienobjekten 28, normalerweise weniger als zwei (n<2), sei $x_{k-1}^V = [x_{k-1} \quad y_{k-1} \quad \theta_{k-1}]^T$ der Positionsvektor des Fahrzeugs 10 relativ zu dem Parkplatz 14. Außerdem wird ein Satz Odometrieparameter als Vektor p angegeben. Zusätzlich sei $x_{k-1}^i$ die Position des i. Linienobjekts 28 zum Zeitpunkt k - 1. Daraus ergibt sich der Kalman-Zustand gemäß

$$x_{k-1} = \begin{bmatrix} x_{k-1}^V \\ p \\ x_{k-1}^1 \\ \vdots \\ x_{k-1}^n \end{bmatrix}$$

Es sei $g$ die Odometriefunktion, die einen kurvenförmigen Verlagerungsvektor v = $[s_k\, u_{\theta,k}]^T$ aus den Parametern $p$, den Ticks der Räder, dem empfangenen Lenkwinkel und dem Rauschvektor q = $[q_s\, q_\theta]^T$ berechnet gemäß

$$v = g(p) + q$$

Die Kovarianz des Störungsvektors ist

$$E[qq^T] = \begin{bmatrix} E[q_s^2] & 0 \\ 0 & E[q_\theta^2] \end{bmatrix} = \begin{bmatrix} Q_s & 0 \\ 0 & Q_\theta \end{bmatrix} = Q$$

In Schritt S150 wird die Position des Fahrzeugs 10, wie sie basierend auf Odometrieinformationen bestimmt wurde, mit der Simultanen Lokalisierung und Kartenzuordnung basierend auf dem Linienobjekt 28 korrigiert.
Ausgehend von der Kovarianz des Störungsvektors ergibt sich ein kartesischer Verschiebungsvektor zu

$$u_k = \begin{bmatrix} u_{x,k} \\ u_{y,k} \\ u_{\theta,k} \end{bmatrix} = \begin{bmatrix} s_k \cos u_{\theta,k} \\ s_k \sin u_{\theta,k} \\ u_{\theta,k} \end{bmatrix}$$

Die neue Fahrzeugposition ergibt sich somit als:

$$x_k^V = x_{k-1}^V + \begin{bmatrix} \cos\theta_{k-1} & -\sin\theta_{k-1} & 0 \\ \sin\theta_{k-1} & \cos\theta_{k-1} & 0 \\ 0 & 0 & 1 \end{bmatrix} \begin{bmatrix} u_{x,k} \\ u_{y,k} \\ u_{\theta,k} \end{bmatrix}$$

Aus der obigen Fahrzeugposition ergibt sich die Vorhersagefunktion für das i. Merkmal des Zustands bei einem Linienobjekt 28 zu:

$$x_k^i = \begin{bmatrix} \cos u_{\theta,k}\left(x_{k-1}^i(1) - u_{x,k}\right) + \sin u_{\theta,k}\left(x_{k-1}^i(2) - u_{y,k}\right) \\ -\sin u_{\theta,k}\left(x_{k-1}^i(1) - u_{x,k}\right) + \cos u_{\theta,k}\left(x_{k-1}^i(2) - u_{y,k}\right) \\ x_{k-1}^i(3) - u_{\theta,k} \end{bmatrix} = f^i\left(x_{k-1}^i, u_k\right) = f^i(x_{k-1}, q)$$

wobei $x_{k-1}^i(j)$ die j. Komponente des i. Merkmals des Zustands ist (Abszisse, Ordinate und Winkel).
Schließlich werden in Schritt S160 Odometrieparameter des Fahrzeugs 10 bestimmt. Wie sich aus der obigen Betrachtung ergibt, enthält die Funktion $f^i$ implizit die Odometriefunktion g, die den Parameter p als Zustand beinhaltet. Daraus lassen sich entsprechend die Odometrieparameter des Fahrzeugs 10 bestimmen. Entsprechend werden Radumfänge des Fahrzeugs 10 und eine Lenkwinkelumrechnungstabelle als Odometrieparameter angepasst.
Die Schritte S140, S150 und S160 werden vorliegend parallel durchgeführt, und die Position des Fahrzeugs 10 wird darauf basierend kontinuierlich korrigiert.

Bezugszeichenliste

10    Fahrzeug
12    Fahrunterstützungssystem

14 Parklücke
16 Steuerungseinrichtung
18 Ultraschallsensor
20 Frontbereich
22 Heckbereich
24 Seite
26 Umgebung
28 Linienobjekt, Objekt

**Patentansprüche**

1. Verfahren zum Korrigieren einer Position eines Fahrzeugs (10), insbesondere beim Einparken in einer Parklücke (14), umfassend die Schritte:

   Bestimmen der Position des Fahrzeugs (10) basierend auf Odometrieinformationen des Fahrzeugs (10),
   Erfassen von Ultraschallsignalen von einem Linienobjekt (28) in Längsrichtung des Fahrzeugs (10),
   Überprüfen der erfassten Ultraschallsignale als zu dem Linienobjekt gehörend,
   Verwerfen von Echos des von dem Ultraschallsensor abgestrahlten
   Ultraschallpulses an Objekten, die nicht zu einem Linienobjekt gehören,
   Durchführen eines Verfahrens zur Simultanen Lokalisierung und Kartenzuordnung (SLAM) basierend auf dem Linienobjekt (28) und den Ultraschallsignalen, und
   Korrigieren der Position des Fahrzeugs (10) basierend auf Odometrieinformationen mit der Simultanen Lokalisierung und Kartenzuordnung basierend auf dem Linienobjekt (28).

2. Verfahren nach Anspruch 1, **dadurch gekennzeichnet, dass**

   der Schritt des Erfassens von einem Linienobjekt (28) in Längsrichtung des Fahrzeugs (10) ein Erfassen von einer Mehrzahl Linienobjekten (28) umfasst, und
   das Verfahren einen zusätzlichen Schritt zum Zuordnen der erfassten Ultraschallsignale zu einem der Linienobjekte (28) umfasst.

3. Verfahren nach einem der vorhergehenden Ansprüche 1 oder 2, **dadurch gekennzeichnet, dass**
   der Schritt des Überprüfens der erfassten Ultraschallsignale als zu dem Linienobjekt (28) gehörend und/oder der Schritt zum Zuordnen der erfassten Ultraschallsignale zu einem der Linienobjekte (28) eine Bestimmung einer Mahalanobis-Distanz umfasst.

4. Verfahren nach einem der vorhergehenden Ansprüche, **dadurch gekennzeichnet, dass**
   der Schritt des Durchführens eines Verfahrens zur Simultanen Lokalisierung und Kartenzuordnung ein Durchführen einer Kalman-Filterung umfasst.

5. Verfahren nach einem der vorhergehenden Ansprüche, **dadurch gekennzeichnet, dass**
   das Verfahren einen zusätzlichen Schritt zum Bestimmen von Odometrieparametern des Fahrzeugs (10) umfasst.

6. Steuerungseinrichtung (14) für ein Fahrunterstützungssystem (12) eines Fahrzeugs (10), welche ausgeführt ist, Odometrieinformationen des Fahrzeugs (10) zu empfangen, die weiter ausgeführt ist, Ultraschallsignale von wenigstens einem Ultraschallsensor (18) des Fahrunterstützungssystems (12) zu empfangen, und die weiter ausgeführt ist, das Verfahren nach einem der vorhergehenden Ansprüche 1 bis 5 durchzuführen.

7. Fahrunterstützungssystem (12) für ein Fahrzeug (10) mit einer Steuerungseinrichtung (16) nach Anspruch 6 und mit wenigstens einem Ultraschallsensor (18).

8. Fahrzeug (10) mit einem Fahrunterstützungssystem (12) nach dem vorhergehenden Anspruch 7.

**Claims**

1. Method for correcting a position of a vehicle (10), in particular when parking in a parking space (14), comprising the steps of:

determining the position of the vehicle (10) on the basis of odometry information relating to the vehicle (10),
sensing ultrasonic signals from a linear object (28) in the longitudinal direction of the vehicle (10),,
verifying the sensed ultrasonic signals as belonging to the linear object,
discarding echoes of the ultrasonic pulse emitted by the ultrasonic sensor at objects that do not belong to a linear object,
carrying out a method for simultaneous localization and mapping (SLAM) on the basis of the linear object (28) and the ultrasonic signals, and
correcting the position of the vehicle (10) on the basis of odometry information by the simultaneous localization and mapping on the basis of the linear object (28).

2. Method according to Claim 1, **characterized in that** the step of sensing a linear object (28) in the longitudinal direction of the vehicle (10) comprises sensing a plurality of linear objects (28), and
the method comprises an additional step for assigning the sensed ultrasonic signals to one of the linear objects (28).

3. Method according to either of the preceding Claims 1 and 2, **characterized in that**
the step of verifying the sensed ultrasonic signals as belonging to the linear object (28) and/or the step of assigning the sensed ultrasonic signals to one of the linear objects (28) comprises a determination of a Mahalanobis distance.

4. Method according to one of the preceding claims, **characterized in that**
the step of carrying out a method for simultaneous localization and mapping comprises carrying out a Kalman filtering.

5. Method according to one of the preceding claims, **characterized in that**
the method comprises an additional step for determining odometry parameters of the vehicle (10).

6. Control device (14) for a driving assistance system (12) of a vehicle (10), which is designed to receive odometry information relating to the vehicle (10), is also designed to receive ultrasonic signals from at least one ultrasonic sensor (18) of the driving assistance system (12), and is also designed to carry out the method according to one of the preceding Claims 1 to 5.

7. Driving assistance system (12) for a vehicle (10) with a control device (16) according to Claim 6 and with at least one ultrasonic sensor (18).

8. Vehicle (10) with a driving assistance system (12) according to the preceding Claim 7.

**Revendications**

1. Procédé de correction d'une position d'un véhicule (10), en particulier lors du stationnement sur une place de stationnement (14), comprenant les étapes :

détermination de la position du véhicule (10) sur la base d'informations odométriques du véhicule (10),
détection de signaux ultrasonores provenant d'un objet de ligne (28) dans le sens longitudinal du véhicule (10),
vérification des signaux ultrasonores détectés comme faisant partie de l'objet de ligne,
renvoi d'échos de l'impulsion ultrasonore émise par le capteur à ultrasons sur des objets, qui ne font pas partie d'un objet de ligne,
mise en œuvre d'un procédé de localisation et de cartographie simultanées (SLAM) sur la base de l'objet de ligne (28) et des signaux ultrasonores, et
correction de la position du véhicule (10) sur la base d'informations odométriques avec la localisation et la cartographie simultanées sur la base de l'objet de ligne (28).

2. Procédé selon la revendication 1, **caractérisé en ce que**

l'étape de la détection d'un objet de ligne (28) dans le sens longitudinal du véhicule (10) comprend une détection d'une multitude d'objets de ligne (28), et
le procédé comprend une étape supplémentaire d'attribution des signaux ultrasonores détectés à un des objets de ligne (28).

3. Procédé selon l'une des revendications précédentes 1 ou 2, **caractérisé en ce que**

l'étape de la vérification des signaux ultrasonores détectés comme faisant partie de l'objet de ligne (28) et/ou l'étape de l'attribution des signaux ultrasonores détectés à un des objets de ligne (28) comprennent une détermination d'une distance de Mahalanobis.

4. Procédé selon l'une des revendications précédentes, **caractérisé en ce que** l'étape de la mise en œuvre d'un procédé de localisation et de cartographie simultanées comprend une mise en œuvre d'un filtre de Kalman.

5. Procédé selon l'une des revendications précédentes, **caractérisé en ce que** le procédé comprend une étape supplémentaire de détermination de paramètres odométriques du véhicule (10).

6. Dispositif de commande (14) pour un système d'aide à la conduite (12) d'un véhicule (10), lequel est réalisé pour recevoir des informations odométriques du véhicule (10), qui est réalisé par ailleurs pour recevoir des signaux ultrasonores d'au moins un capteur à ultrasons (18) du système d'aide à la conduite (12), et qui est réalisé par ailleurs pour mettre en œuvre le procédé selon l'une des revendications précédentes 1 à 5.

7. Système d'aide à la conduite (12) pour un véhicule (10) avec un dispositif de commande (16) selon la revendication 6 et avec au moins un capteur à ultrasons (18).

8. Véhicule (10) avec un système d'aide à la conduite (12) selon la revendication précédente 7.

Fig.1

| S 100 | Linienobjekte erfassen |
|---|---|
| S 110 | Position des Fahrzeugs bestimmen |
| S 120 | Ultraschallsignale von dem Linienobjekt erfassen |
| S 130 | Ultraschallsignale zu Linienobjekt zuordnen |
| S 140 | SLAM basierend auf dem Linienobjekt |
| S 150 | Korrigieren der Position des Fahrzeugs |
| S 160 | Odometrieparameter bestimmen |

# Fig. 2

# EP 3 743 318 B1

**IN DER BESCHREIBUNG AUFGEFÜHRTE DOKUMENTE**

**In der Beschreibung aufgeführte Patentdokumente**

- DE 102009039085 A1
- DE 102009046158 A1
- DE 102015116220 A1